# EUROPEAN PATENT SPECIFICATION

(11) **EP 3 077 273 B1**
(45) Date of publication and mention of the grant of the patent: **09.08.2017**
(21) Application number: 14830736.6
(22) Date of filing: 04.12.2014
(51) Int. Cl.: B62D 21/14, B60P 3/10

(54) **TRAILER WITH A WIDTH-ADJUSTABLE CHASSIS FOR TRANSPORTING A BOAT**
ANHÄNGER MIT EINEM BREITENEINSTELLBAREN FAHRWERK ZUM TRANSPORTIEREN EINES BOOTES
REMORQUE À CHÂSSIS RÉGLABLE EN LARGEUR POUR LE TRANSPORT D'UN BATEAU

(30) Priority: 04.12.2013 NL 2011896
(43) Date of publication of application: 12.10.2016
(73) Proprietor: K.I.G. Heerenveen B.V., 8449 EC Terband-Heerenveen (NL)
(72) Inventor: KNIJPSTRA, Wytze, NL-8406 AG Tijnje (NL)
(74) Representative: Mink-Lindenburg, Charlotte Hildegard
(86) International application number: PCT/NL2014/050830
(87) International publication number: WO 2015/084172

(56) References cited:
- EP-A1- 0 457 621
- WO-A1-2011/065826
- NL-C- 191 884
- NL-C- 2 006 427

## Description

The present invention relates to a trailer for transporting an object such as a boat, provided with a chassis, wherein the chassis is supported by wheels and provided with support elements for the object, wherein the chassis comprises two substantially parallel longitudinal beams and at least one transverse beam for mutually connecting the longitudinal beams, wherein the longitudinal beams are mounted slidably on the transverse beam and wherein the chassis further comprises adjusting means for adjusting the position of the longitudinal beams along the transverse beam.

Boats are regularly taken out of the water and transported overland using trailers, for instance for the purpose of maintenance, repair or other work, such as having a (pre-purchase) inspection carried out or transport to a winter storage.

A trailer of the type stated in the preamble is known in the field. An example hereof is the Netherlands patent NL 191884 which protects a trailer in which the chassis is adjustable in the width. The known trailer is intended as slipway and/or transport trailer for respectively taking a boat out of and placing it in the water and for transport thereof.

The invention has for its object to improve a trailer of the type stated in the preamble and to increase the possible applications thereof.

The trailer according to the invention has for this purpose the feature that the transverse beam comprises one or more slidable parts which are configured to lengthen the transverse beam, and further adjusting means for adjusting the position of the slidable parts along the transverse beam. The slidable transverse beam parts enable optimal adjustment of the width of the chassis over a wider range. The trailer is hereby universally applicable. When at rest the trailer lies in the position with minimum chassis width and consequently takes up minimal space.

In a first preferred embodiment the longitudinal beams are mounted slidably on the slidable parts of the transverse beam. The further adjusting means then need only be operative along the length of the slidable parts.

In a symmetrical preferred embodiment the transverse beam is provided with the slidable parts at both outer ends thereof. Optimal selection of the width of the chassis can hereby be made within a greater range on both sides.

When compared to the known trailer, a similar strength can be obtained in a preferred embodiment in which the transverse beam and the slidable parts have a corresponding form and are at least partially slidable in each other.

According to a further development of the preferred embodiment with improved strength and increased loading capacity, the longitudinal beams are provided with a sleeve which extends substantially transversely of the longitudinal beams and is mounted round the slidable parts and has a form corresponding thereto. The corresponding form is preferably a box-like form.

In a further preferred embodiment the further adjusting means comprise hydraulic cylinders. Hydraulic cylinders are reliable, can produce great forces and can even lock the slidable transverse beam parts in position. Hydraulic cylinders can also be connected in simple manner to the hydraulic system which is generally available on any suitable tractive vehicle for the trailer.

In a self-propelling embodiment the trailer is provided with means for independent movement.

The invention will now be described in more detail with reference to the figures. The same components are designated in the figures with the same reference numerals.
Figure 1 is a schematic top view of a first preferred embodiment of a trailer according to the present invention;
Figure 2A is a top view of the front part of the trailer of figure 1 in a first position;
Figure 2B is a top view of the front part of the trailer of figure 1 in a second position; and
Figure 2C is a top view of the front part of the trailer of figure 1 in a third position.

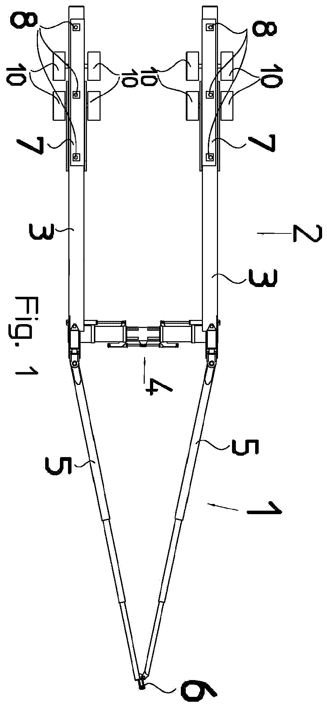

Figure 1 shows a preferred embodiment of a trailer 1 according to the invention. Trailer 1 is intended for the purpose of transporting a boat. To this end the trailer comprises a chassis 2 which is generally U-shaped. Chassis 2 comprises two longitudinal beams 3 which are mutually connected by means of a transverse beam 4.

In the shown preferred embodiment chassis 2 is further provided with a V-shaped drawbar with drawbar arms 5 which are provided at the outer end with a joint drawbar eye 6. Chassis 2 is supported on the rear part by wheels 10. Longitudinal beams 3 are each provided there with a housing 7 on which boat supports 8 are arranged.

In the shown first preferred embodiment wheels 10 form part of two double sets of wheels which are mutually coupled by means of a tandem. Each double wheel set consists of two wheels 10 which are mounted on a shared wheel shaft.

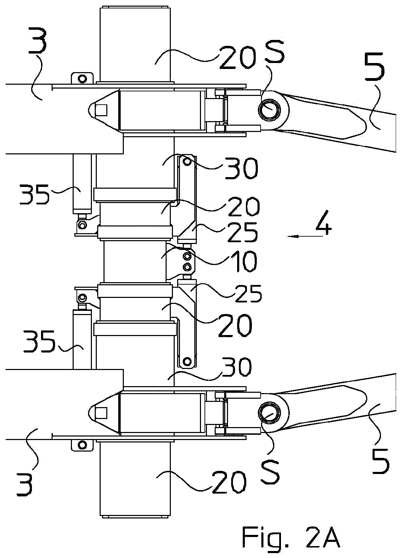

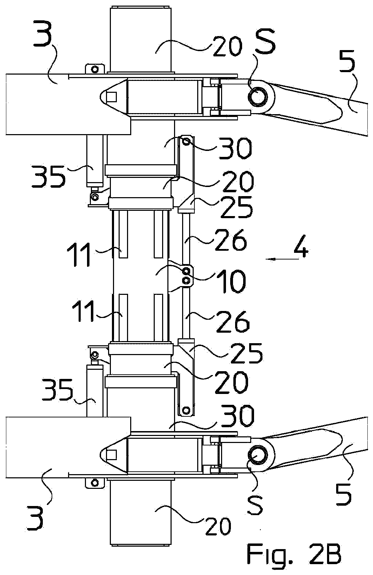

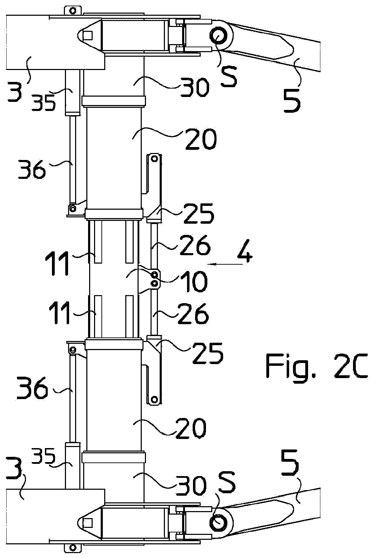

Chassis 2 is adjustable in the width. Figures 2A, 2B and 2C show top views of the front part of chassis 2 in diverse positions with associated width dimensions. Figure 2A shows chassis 2 in a first position with minimum width. Figure 2B shows chassis 2 in a second position with average width. Figure 2C shows chassis 2 in a third position with maximum width. According to the invention the transverse beam 4 comprises a number of parts 10, 20 which are slidable relative to each other and configured to lengthen the transverse beam 4. The slidable transverse beam parts 10, 20 are slidable in each other, more particularly each transverse beam part 20 is slidable over transverse beam part 10. The slidable transverse beam parts 10, 20 have a corresponding form, for instance a box-like form as shown or a tubular form. In the shown preferred embodiment transverse beam part 10 is provided with slidable transverse beam parts 20 at both outer ends thereof.

Transverse beam 4 comprises further adjusting means 25 for adjusting the position of the slidable transverse beam parts 20 along transverse beam part 10. Further adjusting means 25 can be operated both manually and automatically. An example of suitable manually operated adjusting means is a spindle. Suitable automatically operated adjusting means are actuators which can take an electrical, pneumatic and hydraulic form. In the shown preferred embodiment the further adjusting means comprise hydraulic cylinders 25 which are mounted on transverse beam parts 20 and the piston rod 26 of which engages on transverse beam part 10. Each of the further adjusting means 25 is preferably individually controllable. They can however also be jointly controllable.

Transverse beam parts 20 are arranged round transverse beam part 10. Suitable guide means are located therebetween, such as guide strips or slide blocks of suitable materials, for instance steel, bronze, stainless steel or plastic. Guide strips 11 are illustrated in the shown preferred embodiment. The extreme position which transverse beam parts 20 can occupy is bounded, for instance by means of a stop.

Longitudinal beams 3 are mounted slidably on the slidable transverse beam parts 20 of transverse beam 4. Longitudinal beams 3 are provided for this purpose with a sleeve 30 which extends substantially transversely of longitudinal beam 3 and is mounted round the slidable transverse beam parts 20.

Sleeve 30 comprises adjusting means 35 for adjusting the position of the sleeve along the slidable transverse beam parts 20. Adjusting means 35 can be operated both manually and automatically. An example of suitable manually operated adjusting means is a spindle. Suitable automatically operated adjusting means are actuators which can take an electrical, pneumatic and hydraulic form. In the shown preferred embodiment the adjusting means comprise hydraulic cylinders 35 which are mounted on sleeves 30 and the piston rod 36 of which engages on transverse beam parts 20. Each of the adjusting means 35 is preferably individually controllable. They can however also be jointly controllable.

Sleeves 30 are arranged round transverse beam parts 20. Suitable guide means are located therebetween, such as guide strips or slide blocks of suitable materials, for instance steel, bronze, stainless steel or plastic (not shown). The extreme position which sleeves 30 can occupy is bounded, for instance by means of a stop.

Hydraulic cylinders 25 and 35 can be connected to the hydraulic system of the tractive vehicle for actuation thereof.

The present invention is of course not limited to the shown and described preferred embodiment. In addition to the application for transport of boats, the trailer according to the invention is for instance highly suitable for transporting other objects. It is possible here to envisage for instance heavy construction elements such as concrete elements, steel components, drill pipes or prefab components.

It will be apparent to a skilled person in the relevant field that the transverse beam can be constructed from a larger number of transverse beam parts than is shown in the figures which are preferably arranged slidably in each other. The transverse beam parts need not be arranged symmetrically.

Transverse beam 4 can further also be provided with one or more (boat) supports preferably mounted centrally on transverse beam part 10.

The V-shaped drawbar can be replaced by a central drawbar shaft which engages on transverse beam 4. The chassis can further be supported with wheels on the front side. There can of course also be a different number of wheel sets, or the sets of wheels can take a single-wheel form as desired.

The scope of protection sought therefore extends to any embodiment falling within the text of the claims, as seen in the light of the foregoing description and accompanying drawings.

## Claims

1. Trailer (1) for transporting an object such as a boat and provided with a chassis (2), wherein the chassis is supported by wheels and provided with support elements (8) for the object, wherein the chassis comprises two substantially parallel longitudinal beams (3) and at least one transverse beam (4) for mutually connecting the longitudinal beams, wherein the longitudinal beams are mounted slidably on the transverse beam and wherein the chassis further comprises adjusting means (25) for adjusting the position of the longitudinal beams along the transverse beam, **characterized in that** the transverse beam (4) comprises one or more slidable parts (10, 20) which are configured to lengthen the transverse beam (4), and further adjusting means (35) for adjusting the position of the slidable parts (20) along the transverse beam (4).

2. Trailer as claimed in claim 1, wherein the longitudinal beams (3) are mounted slidably on the slidable parts (20) of the transverse beam (4).

3. Trailer as claimed in any of the foregoing claims, wherein the transverse beam (4) is provided with the slidable parts (20) at both outer ends thereof.

4. Trailer as claimed in any of the foregoing claims, wherein the slidable parts (10, 20) of the transverse beam (4) have a corresponding form and are at least partially slidable in each other.

5. Trailer as claimed in claim 4, wherein the longitudinal beams (3) are provided with a sleeve (30) which extends substantially transversely of the longitudinal beams (3) and is mounted round the slidable parts (20) and has a form corresponding thereto.

6. Trailer as claimed in claim 4 or 5, wherein the corresponding form is a box-like form.

7. Trailer as claimed in any of the foregoing claims, wherein the further adjusting means comprise hydraulic cylinders (35).

8. Trailer as claimed in any of the foregoing claims, wherein the trailer is provided with means for independent movement.

## Patentansprüche

1. Anhänger (1) zum Transportieren eines Gegenstandes, wie eines Bootes, und versehen mit einem Fahrgestell (2), wobei das Fahrgestell von Rädern getragen wird und mit Stützmitteln (8) für den Gegenstand versehen ist, wobei das Fahrgestell zwei im Wesentlichen parallele Längsträger (3) und wenigstens einen Querträger (4) umfasst, um die Längsträger miteinander zu verbinden, wobei die Längsträger verschiebbar auf dem Querträger montiert sind und wobei das Fahrgestell weiterhin Justiermittel (25) umfasst, um die Position der Längsträger entlang dem Querträger zu justieren, **dadurch gekennzeichnet, dass** der Querträger (4) ein oder mehrere verschiebbare Teile (10, 20), die ausgebildet sind, um den Querträger (4) zu verlängern, sowie weitere Justiermittel (35) umfasst, um die Position der verschiebbaren Teile (20) entlang des Querträgers (4) zu justieren.

2. Anhänger gemäß Anspruch 1, wobei die Längsträger (3) verschiebbar auf die verschiebbaren Teile (20) des Querträgers (4) montiert sind.

3. Anhänger gemäß einem der vorhergehenden Ansprüche, wobei der Querträger (4) an dessen beiden äußeren Enden mit verschiebbaren Teilen (20) versehen ist.

4. Anhänger gemäß einem der vorhergehenden Ansprüche, wobei die verschiebbaren Teile (10, 20) des Querträgers (4) eine korrespondierende Form aufweisen und zumindest teilweise ineinander schiebbar sind.

5. Anhänger gemäß Anspruch 4, wobei die Längsträger (3) mit einer Hülse (30) versehen sind, die sich im Wesentlichen quer zu den Längsträgern (3) erstreckt und die um die verschiebbaren Teile (20) montiert ist und eine hierzu entsprechende Form aufweist.

6. Anhänger gemäß Anspruch 4 oder 5, wobei die korrespondierende Form eine boxenförmige Form ist.

7. Anhänger gemäß einem der vorhergehenden Ansprüche, wobei die weiteren Justiermittel Hydraulikzylinder (35) umfassen.

8. Anhänger gemäß einem der vorhergehenden Ansprüche, wobei der Anhänger mit Mitteln zur unabhängigen Bewegung versehen ist.

## Revendications

1. Remorque (1) destinée au transport d'un objet tel qu'un bateau et pourvue d'un châssis (2), le châssis étant soutenu par des roues et étant pourvu d'éléments de support (8) pour l'objet, le châssis comprenant deux poutres longitudinales (3) sensiblement parallèles et au moins une poutre transversale (4) destinée à relier entre elles les poutres longitudinales, les poutres longitudinales étant montées coulissantes sur la poutre transversale et le châssis comprenant en outre des moyens de réglage (25) pour régler la position des poutres longitudinales le long de la poutre transversale, **caractérisée en ce que** la poutre transversale (4) comprend une ou plusieurs pièces coulissantes (10, 20) conçues pour rallonger la poutre transversale (4), et des moyens de réglage (35) supplémentaires pour régler la position des pièces coulissantes (20) le long de la poutre transversale (4).

2. Remorque selon la revendication 1, dans laquelle les poutres longitudinales (3) sont montées de façon coulissante sur les pièces coulissantes (20) de la poutre transversale (4).

3. Remorque selon l'une quelconque des revendications précédentes, dans laquelle la poutre transversale (4) est pourvue des pièces coulissantes (20) à ses deux extrémités extérieures.

4. Remorque selon l'une quelconque des revendications précédentes, dans laquelle les pièces coulissantes (10, 20) de la poutre transversale (4) ont une forme correspondante et sont au moins partiellement coulissantes l'une dans l'autre.

5. Remorque selon la revendication 4, dans laquelle les poutres longitudinales (3) sont pourvues d'un manchon (30) qui s'étend sensiblement transversalement aux poutres longitudinales (3) et qui est monté autour des pièces coulissantes (20) et qui présente une forme correspondant à celles-ci.

6. Remorque selon la revendication 4 ou 5, dans laquelle la forme correspondante est une forme de type boîte.

7. Remorque selon l'une quelconque des revendications précédentes, dans laquelle les moyens de réglage supplémentaires comprennent des cylindres hydrauliques (35).

8. Remorque selon l'une quelconque des revendications précédentes, dans laquelle la remorque est pourvue de moyens pour un mouvement indépendant.
